# EUROPEAN PATENT SPECIFICATION

(11) **EP 3 321 182 B1**
(45) Date of publication and mention of the grant of the patent: **30.12.2020**
(21) Application number: 17201443.3
(22) Date of filing: 13.11.2017
(51) Int. Cl.: B64D 25/14

(54) **REDUNDANT LAYER FOR INFLATABLE EVACUATION COMPONENT**
REDUNDANTE SCHICHT FÜR AUFBLASBARE EVAKUIERUNGSKOMPONENTE
COUCHE REDONDANTE POUR COMPOSANT D'ÉVACUATION GONFLABLE

(30) Priority: 14.11.2016 US 201615350808
(43) Date of publication of application: 16.05.2018
(73) Proprietor: Goodrich Corporation, Charlotte, NC 28217-4578 (US)
(72) Inventor: VOLNY, Jaro S., Scottsdale, AZ 85251 (US); HARTMAN, Drew, Phoenix, AZ 85085 (US)
(74) Representative: Dehns

(56) References cited:
- DE-A1- 4 309 954
- IT-B- 1 128 610
- US-A- 3 359 579
- US-A- 3 674 124
- US-A- 6 004 176

## Description

### FIELD

The present disclosure relates to aircraft evacuation assemblies, and more specifically, to inflatable components of aircraft evacuation assemblies.

### BACKGROUND

An aircraft evacuation assembly may include inflatable components that, once deployed, help passengers disembark from an aircraft in the event of an emergency or other evacuation event. In certain applications, an inflatable component of an aircraft evacuation assembly may also function as a life raft if, for example, the aircraft landed in or was otherwise situated in or over water. Accordingly, because the inflatable components are potentially life-saving, ensuring that such components remain inflated (e.g., preventing inadvertent deflation) is important to the reliability and safety of aircraft evacuation assemblies. US 3359579 discloses an inflatable component according to the preamble of claim 1.

### SUMMARY

According to a first aspect, there is provided an inflatable component according to claim 1.

The inlet valve may include an interface for connecting to a fluid storage tank of the aircraft evacuation assembly. In various embodiments, the inlet valve is an aspirator configured to entrain air from atmosphere (e.g., ambient air) into the first fluid chamber. The first location may be directly adjacent the second location such that a portion of an exterior surface of the first inflatable bladder is substantially in direct contact with at least a portion of an interior surface of the second inflatable bladder. In various embodiments, the first location is spaced apart from the second location such that a gap exists and is at least partially defined between the first inflatable bladder at the first location and the second inflatable bladder at the second location. The first inflatable bladder and the second inflatable bladder, in response to both the first inflatable bladder and the second inflatable bladder being inflated, may bound a void defined between the first inflatable bladder and the second inflatable bladder. The void may be maintained between the inflatable bladders under normal operating/inflated conditions.

The second fluid chamber may be isolated from direct fluid receiving communication with the inlet valve. For example, fluid communication between the first fluid chamber and the second fluid chamber may be exclusively via the pressure relief valve. In various embodiments, the inflatable component further includes a plurality of flexible spacer elements disposed between and coupled to the first inflatable bladder and the second inflatable bladder. The inflatable component may be a slide-raft inflatable of the aircraft evacuation assembly.

In various embodiments, the pressure relief valve has a diameter between about 2.54 cm (1 inch) and about 15.24 cm (6 inches). In various embodiments, the pressure relief valve comprises a diameter between about 5.08 cm (2 inches) and about 10.16 cm (4 inches). In various embodiments, the ratio of the diameter of the pressure relief valve to a diameter of the second inflatable bladder is between about 1/10 and about 3/10.

In various embodiments of the aircraft evacuation assembly, the inlet valve is an aspirator configured to entrain air from ambient atmosphere into the first fluid chamber in response to the fluid from the fluid storage tank being delivered to the first fluid chamber.

According to another aspect, there is provided a method of deploying a slide-raft inflatable of an aircraft evacuation assembly according to claim 11.

In various embodiments, the inlet valve is an aspirator such that inflating the first inflatable bladder of the slide-raft inflatable includes entraining air from atmosphere into a flow of fluid from a fluid storage tank of the aircraft evacuation assembly into the first fluid chamber of the first inflatable bladder. In various embodiments and in response to inflating the first inflatable bladder and inflating the second inflatable bladder, the first inflatable bladder is free from direct contact with the second inflatable bladder.

These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the following illustrative figures. In the following figures, like reference numbers refer to similar elements and steps throughout the figures.
FIG. 1 illustrates a perspective view of an evacuation assembly of an aircraft, in accordance with various embodiments;
FIG. 2 illustrates a cross-sectional view of an inflatable component of an aircraft evacuation assembly having a single inlet valve, in accordance with various embodiments;
FIG. 3 illustrates a cross-sectional view of an inflatable component of an aircraft evacuation assembly, not belonging to the present invention, having two inlet valves;
FIGS. 4 and 5 illustrate cross-sectional views of inflatable components of an aircraft evacuation assembly having an inlet aspirator, in accordance with various embodiments; and
FIG. 6 illustrates a schematic flow chart diagram of a method of deploying a slide-raft inflatable of an aircraft evacuation assembly, in accordance with various embodiments.

Elements and steps in the figures are illustrated for simplicity and clarity and have not necessarily been rendered according to any particular sequence. For example, steps that may be performed concurrently or in different order are illustrated in the figures to help to improve understanding of embodiments of the present disclosure.

### DETAILED DESCRIPTION

The detailed description of exemplary embodiments herein makes reference to the accompanying drawings, which show exemplary embodiments by way of illustration. While these exemplary embodiments are described in sufficient detail to enable those skilled in the art to practice the disclosures, it should be understood that other embodiments may be realized and that logical changes and adaptations in design and construction may be made in accordance with this disclosure and the teachings herein. Thus, the detailed description herein is presented for purposes of illustration only and not of limitation.

The scope of the disclosure is defined by the appended claims and their legal equivalents rather than by merely the examples described. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to tacked, attached, fixed, coupled, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

As used herein, "aft" refers to the direction associated with the tail (e.g., the back end) of an aircraft, or generally, to the direction of exhaust of the gas turbine. As used herein, "forward" refers to the direction associated with the nose (e.g., the front end) of an aircraft, or generally, to the direction of flight or motion. Also, like reference numbers refer to similar elements and steps throughout the figures.

A first component that is "radially outward" of a second component means that the first component is positioned at a greater distance away from a central longitudinal axis. A first component that is "radially inward" of a second component means that the first component is positioned closer to the central longitudinal axis than the second component.

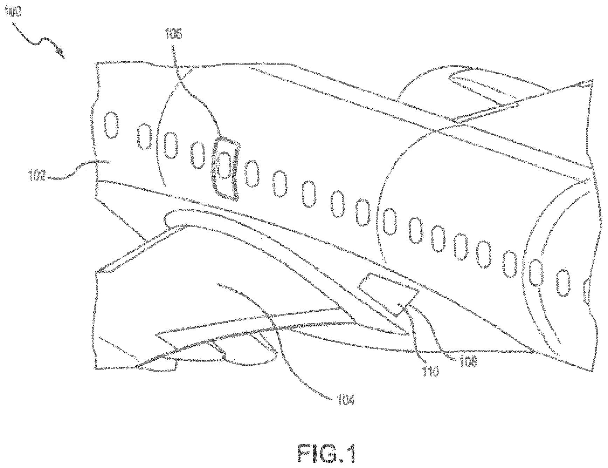

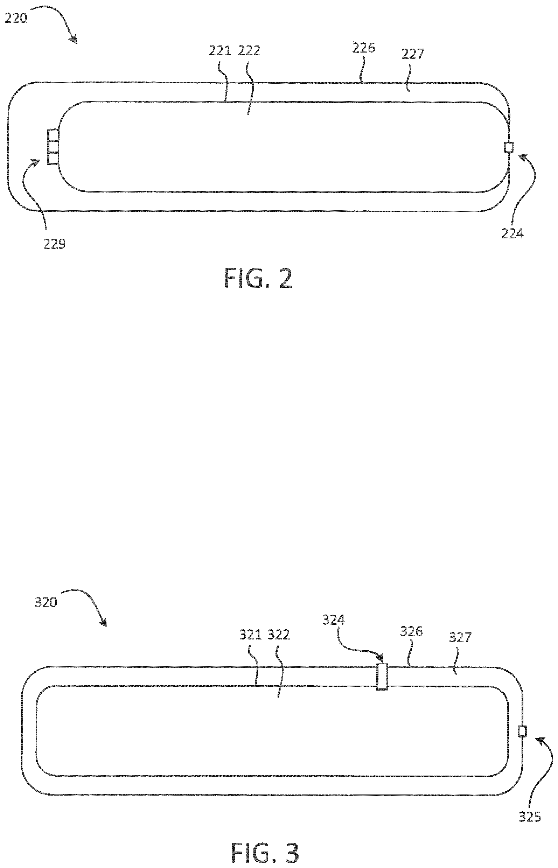

In various embodiments, the present disclosure includes an inflatable component 220 (with reference to FIG. 2) of an aircraft evacuation assembly 108 (with reference to FIG. 1). Referring to FIG. 1, an exemplary aircraft 100 is shown, in accordance with various embodiments. Aircraft 100 may comprise a fuselage 102 with wings 104 fixed to fuselage 102. Emergency exit door 106 may be disposed on fuselage over wing 104 such that passengers exiting emergency exit door 106 would exit onto wing 104. An evacuation assembly 108 may be disposed aft of emergency exit door 106. Blowout panel 110 may cover evacuation assembly 108 when installed on the aircraft 100. In various embodiments, the evacuation assembly 108 may include and/or be housed within a packboard mounted to the aircraft 100.

In the event of an emergency or other evacuation event, the evacuation assembly 108 may jettison the blowout panel 110 and deploy the inflatable component 220, such as an inflatable slide and/or an inflatable raft. In various embodiments, the inflatable component 220 may function as both an evacuation slide and a raft. In various embodiments, deployment of the evacuation assembly 108 may be in response to emergency exit door 106 opening.

As mentioned above, preventing failure (e.g., inadvertent deflation) of inflatable components, such as the inflatable component 220 of FIG. 2, is important because maintaining appropriate inflation levels of such components may provide potentially life-saving support to passengers of the aircraft 100. Accordingly, the inflatable component 220 disclosed herein, according to various embodiments, includes two inflatable bladders 221, 226 to provide dual layer redundancy to the inflatable component 220. The term "bladder" as used herein refers to any flexible structure that has and/or at least partially defines a hollow cavity/chamber that is capable of being inflated. For example, one or both of the inflatable bladders 221, 226 may be a tube or a flexible duct that can be inflated and configured to retain a fluid therein within a desired pressure range. Accordingly, while FIGS. 2-5 show schematic views of the inflatable component in a substantially inflated state, the inflatable components may be in a collapsed state and may have a condensed form when stored in a pre-deployed, pre-inflated state.

In various embodiments, because of the redundancy of the two inflatable bladders 221, 226, if one of the inflatable bladders 221, 226 were to fail (e.g., puncture, tear, rip, etc.), the other bladder may still provide the potentially life-saving assistance to the passengers of the aircraft 100. The inflatable component 220 may be an inflatable evacuation slide, an inflatable evacuation slide, and/or an inflatable slide-raft hybrid (e.g., a slide that also functions as a raft).

The first inflatable bladder 221 defines a first fluid chamber 222 and the second inflatable bladder 226 defines a second fluid chamber 227. In various embodiments and with reference to FIG. 2, the second inflatable bladder 226 circumscribes the first inflatable bladder 221 such that the first inflatable bladder 221 is disposed within the second fluid chamber 227. In various embodiments, the first inflatable bladder 221 and the second inflatable bladder 226 may be made from a flexible material, such as a flexible fabric, plastic, composite, or textile material, among others.

The inflatable component 220 includes also an inlet valve 224 and a pressure relief valve 229. The inlet valve 224, according to various embodiments, includes structure that defines a passageway to deliver fluid into one or both of the fluid chambers 222, 227. In various embodiments, the inlet valve 224 may include a movable valve member that can be actuated to allow, restrict, block, or otherwise control the flow of fluid through the valve 224. In various embodiments, the inlet valve 224 may not include movable valve members and thus may simply include or define a passageway through which a controlled fluid (e.g., actuated, controlled upstream) may flow. For example, the inlet valve 224 may include an interface that may be coupled with an upstream fluid source, such as a fluid storage tank. In various embodiments, the fluid storage tank may be a charged tank that contains a compressed fluid. For example, the charged tank may be a pneumatic gas cylinder and flow of the compressed fluid from the charged tank may be controlled upstream of the inlet valve 224 or may be controlled directly at the inlet valve 224.

With reference to FIG. 2 and according to various embodiments, the inflatable component 220 includes a single inlet valve 224 that is coupled to both the first inflatable bladder 221 and the second inflatable bladder 226. The inlet valve 224 is configured to deliver fluid into the first fluid chamber 222 of the first inflatable bladder 221. The pressure relief valve 229 is configured to deliver fluid from the first fluid chamber 222 to the second fluid chamber 227. Thus, fluid communication between the first fluid chamber 222 and the second fluid chamber 227 is via the pressure relief valve 229, according to various embodiments. The pressure relief valve 229, according to various embodiments, may be the exclusive means of fluid communication between the first fluid chamber 222 and the second fluid chamber 227.

In various embodiments, the pressure relief valve 229 is configured to meter and/or deliver fluid from the first fluid chamber 222 into the second fluid chamber 227 in response to the fluid pressure within the first fluid chamber 222 reaching a predetermined pressure threshold. Accordingly, the pressure relief valve 229 may include a biasing element, such as a spring, coupled to a diaphragm. Once the pressure reaches the predetermined pressure threshold, said pressure may overcome the bias force of the biasing element and thus may move the diaphragm to allow fluid to bleed into the second fluid chamber 227.

With reference to FIG. 3, which represents an example not covered by the present invention, the inflatable component 320 may include two inlet valves: a first inlet valve 324 and a second inlet valve 325. The first inlet valve 324 may extend through and be coupled to both the first inflatable bladder 321 and the second inflatable bladder 326. Accordingly, the first inlet valve 324 may be configured to deliver fluid to the first fluid chamber 322. The second inlet valve 325 may extend through and be coupled to the second inflatable bladder 326 and thus may be configured to deliver fluid to the second fluid chamber 327. In this example, the first fluid chamber 322 and the second fluid chamber 327 may not be in fluid communication with each other and thus may be completely fluidly isolated from each other.

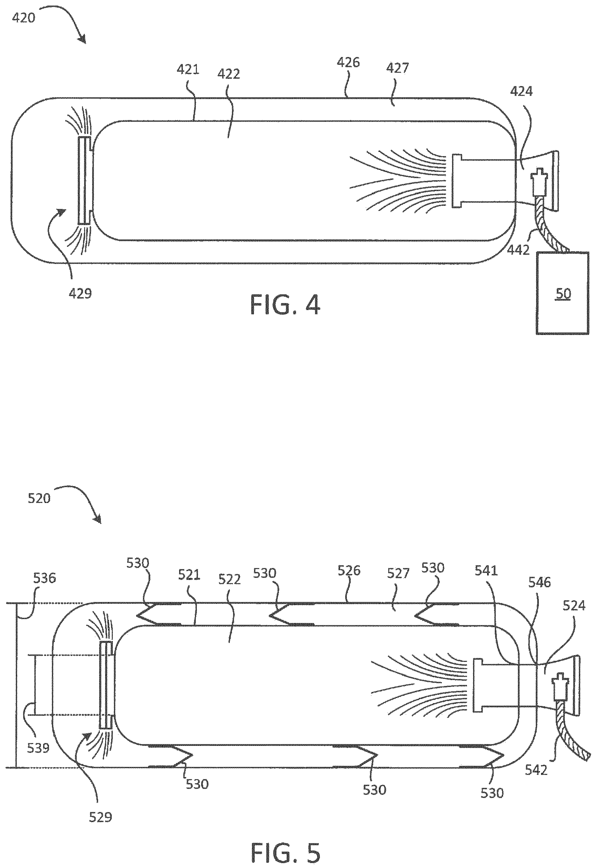

With reference to FIG. 4 and according to various embodiments, the inflatable component 420 may have an aspirator 424 as the inlet valve. The aspirator 424 may include an interface 442 that is coupleable with a fluid source, such as a fluid storage tank 50. In response to fluid flowing through the interface 442 and into/through the aspirator 424, the aspirator 424 may be configured to entrain ambient atmosphere air into the fluid flow. Accordingly, the aspirator 424 may be configured to deliver fluid from an upstream fluid source, such as fluid storage tank 50, and air from the atmosphere surrounding the aspirator 424.

In various embodiments, as mentioned above with reference to FIG. 2, the aspirator 424 may be coupled to and may extend through both the first inflatable bladder 421 and the second inflatable bladder 426. Thus, the aspirator 424 may be configured to deliver fluid into the first fluid chamber 422, which may then be bled through the pressure relief valve 429 and into the second fluid chamber 427 in response to the pressure within the first fluid chamber 422 reaching a predetermined pressure threshold. In various embodiments, as shown in FIG. 4, the first inflatable bladder 421 and the second inflatable bladder 426 may be coupled to the aspirator 424 at the same or substantially the same location (adjacent each other) along the length of the aspirator 424. In such embodiments, the dual layer redundancy is maintained until each bladder 421, 426 contacts and is coupled to the aspirator 424. In such embodiments, a portion of an exterior surface portion of the first inflatable bladder 421 may be in direct contact with a portion of an interior surface portion of the second inflatable bladder 426. In other words, the respective portions of the two inflatable bladders 421, 426 that are at or in close proximity to the aspirator 424 may be substantially in direct contact with each other. "Substantially" is used in this context to mean that the inflatable bladders 421, 426 may directly contact each other under normal operating/inflated conditions. According to the invention, despite potentially contacting each other at or near the aspirator 424, the inflatable bladders 421, 426 are not directly coupled to each other. That is, the first inflatable bladder 421 is not directly coupled to the second inflatable bladder 426 (e.g., they are indirectly coupled to each other via the aspirator 424).

With reference to FIG. 5 and according to various embodiments, the first inflatable bladder 521 and the second inflatable bladder 526 of the inflatable component 520 are both coupled to the aspirator 524 (e.g., the inlet valve). The first inflatable bladder 521, according to various embodiments, is coupled to the aspirator 524 at a first location 541 along a length of the aspirator 524 and the second inflatable bladder 526 is coupled to the aspirator 524 at a second location 546 along the length of the aspirator. In various embodiments, the first location 541 may be spaced apart from the second location 546 such that a gap exists between the first location 541 and the second location 546. Such a configuration may facilitate the second inflatable bladder 526 remaining disposed a distance away from the first inflatable bladder 521 in response to both of the bladders 521, 526 being inflated. That is, in the inflated state (e.g., when the first fluid chamber 522 has been inflated directly via the aspirator 524 and the second fluid chamber 527 has been inflated via the pressure relief valve 529), the two bladders 521, 526 may be configured to remain disposed apart from each other and thus may bound and defined a void/volume between them. In various embodiments, the inflatable bladders 521, 526 are free from direct contact with each other. In such embodiments, the reliability of the inflatable component 520 may further be augmented because, for example, an object that may cause a puncture in the second inflatable bladder 526 will be less likely to puncture the first inflatable bladder 521 because of the space/gap between the two bladders 521, 526.

In various embodiments, the inflatable component 520 may include a plurality of spacer elements 530 disposed in the gap between the two bladders 521, 526. The spacer elements 530 may facilitate maintaining the two bladders 521, 526 spaced apart from each other. In various embodiments, the spacer elements 530 are flexible strips of material that are adhesively bonded to the exterior surface of the first inflatable bladder 521 and the interior surface of the second inflatable bladder 526. In various embodiments, the spacer elements 530 may form a hinge shape. In various embodiments, the spacer elements 530 may be resiliently flexible.

In various embodiments, the pressure relief valve 529 may be a high flow pressure relief vent. In various embodiments, the pressure relief valve 529 may have a diameter 539, as measured across an opening of the first inflatable bladder 521 where the pressure relief valve 529 is coupled to the first inflatable bladder 521. that is between about 2.5 centimeters (1 inch) and about 15.2 centimeters (6 inches). In various embodiments, the diameter 539 of the opening leading to the pressure relief valve 529 is between about 5.1 centimeters (2 inches) and about 10.2 centimeters (4 inches). As used in this context, the term "about" refers to plus or minus 1.25 cm (0.5 inches). In various embodiments, a ratio of the diameter 539 of the pressure relief valve to a diameter 536 of the second inflatable bladder 526 is between about 1/10 and about 3/10.

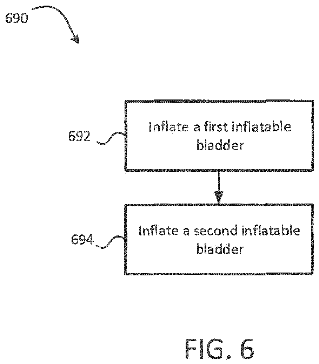

With reference to FIG. 6 and according to various embodiments, a method 690 of deploying a slide-raft inflatable of an aircraft evacuation assembly is disclosed. The method 690 includes, according to various embodiments, inflating a first inflatable bladder by actuating an inlet valve to deliver fluid into a first fluid chamber of the first inflatable bladder of the slide-raft inflatable at step 692. The method 690 includes, in response to a fluid pressure in the first fluid chamber reaching a predetermined pressure, inflating a second inflatable bladder by delivering the fluid from the first fluid chamber of the first inflatable bladder to a second fluid chamber of the second inflatable bladder of the slide-raft inflatable at step 694. The second inflatable bladder circumscribes the first inflatable bladder such that the first inflatable bladder is disposed in the second fluid chamber.

In various embodiments, the inlet valve includes an aspirator such that inflating the first inflatable bladder of the slide-raft inflatable at step 692 includes entraining air from atmosphere into a flow of fluid from a fluid storage tank of the aircraft evacuation assembly into the first fluid chamber of the first inflatable bladder. In various embodiments, in response to inflating the first inflatable bladder at step 692 and inflating the second inflatable bladder at step 694, the first inflatable bladder is substantially free from direct contact with the second inflatable bladder.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosures.

The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment.

## Claims

1. An inflatable component (220) of an aircraft evacuation assembly (108), the inflatable component comprising:
a first inflatable bladder (221) defining a first fluid chamber (222);
a second inflatable bladder (226) defining a second fluid chamber (227), wherein the second inflatable bladder circumscribes the first inflatable bladder such that the first inflatable bladder is disposed in the second fluid chamber;
an inlet valve (224) coupled to the first inflatable bladder and the second inflatable bladder, wherein the inlet valve is configured to deliver fluid to the first fluid chamber; and
a pressure relief valve (229) coupled to the first inflatable bladder, wherein fluid communication between the first fluid chamber and the second fluid chamber is via the pressure relief valve; and **characterised in that**
the first inflatable bladder (221) is coupled to the inlet valve (224) at a first location along a length of the inlet valve and the second inflatable bladder (226) is coupled to the inlet valve at a second location along the length of the inlet valve such that the first inflatable bladder (221) is indirectly coupled to the second inflatable bladder (226) via the inlet valve (224),
wherein the inflatable component comprises complete layer redundancy via the first and second inflatable bladders.

2. The inflatable component of claim 1, wherein the inlet valve comprises an interface for connecting to a fluid storage tank of the aircraft evacuation assembly, or wherein the inlet valve comprises an aspirator configured to entrain air from atmosphere into the first fluid chamber.

3. The inflatable component of claim 1, wherein the first location is directly adjacent the second location such that a portion of an exterior surface of the first inflatable bladder is substantially in direct contact with a portion of an interior surface of the second inflatable bladder, or wherein the first location is spaced apart from the second location such that a gap exists and is partially defined between the first inflatable bladder at the first location and the second inflatable bladder at the second location.

4. The inflatable component of claim 3, wherein the first inflatable bladder and the second inflatable bladder, in response to both the first inflatable bladder and the second inflatable bladder being inflated, bound a void defined between the first inflatable bladder and the second inflatable bladder.

5. The inflatable component of any preceding claim, wherein the second fluid chamber is isolated from direct fluid receiving communication with the inlet valve.

6. The inflatable component of claim 1, wherein fluid communication between the first fluid chamber and the second fluid chamber is exclusively via the pressure relief valve (229).

7. The inflatable component of any preceding claim, further comprising a plurality of flexible spacer elements (530) disposed between and coupled to the first inflatable bladder and the second inflatable bladder.

8. The inflatable component of any preceding claim, wherein the pressure relief valve comprises a diameter between 2.54 cm (1 inch) and 15.24 cm (6 inches), or wherein the pressure relief valve comprises a diameter between 5.08 cm (2 inches) and 10.16 cm (4 inches).

9. An aircraft evacuation assembly comprising:
a packboard;
a fluid storage tank mounted to the packboard;
the inflatable component according to any preceding claim wherein the inflatable component is a slide-raft inflatable (220),
wherein the inlet valve is coupled in fluid receiving communication with the fluid storage tank to deliver a fluid from the fluid storage tank to the first fluid chamber.

10. The aircraft evacuation assembly of claim 9, wherein the inlet valve comprises an aspirator (424) configured to entrain air from ambient atmosphere into the first fluid chamber in response to the fluid from the fluid storage tank being delivered to the first fluid chamber.

11. A method of deploying a slide-raft inflatable of an aircraft evacuation assembly, the method comprising:
providing the inflatable component according to claim 1; wherein the inflatable component is the slide raft inflatable;
inflating the first inflatable bladder by actuating the inlet valve to deliver fluid into the first fluid chamber of the first inflatable bladder of the slide-raft inflatable; and
in response to a fluid pressure in the first fluid chamber reaching a predetermined pressure, inflating the second inflatable bladder by delivering fluid from the first fluid chamber of the first inflatable bladder to the second fluid chamber of the second inflatable bladder of the slide-raft inflatable, wherein the second inflatable bladder circumscribes the first inflatable bladder such that the first inflatable bladder is disposed in the second fluid chamber.

12. The method of claim 11, wherein the inlet valve comprises an aspirator such that inflating the first inflatable bladder of the slide-raft inflatable comprises entraining air from atmosphere into a flow of fluid from a fluid storage tank of the aircraft evacuation assembly into the first fluid chamber of the first inflatable bladder.

13. The method of claim 11, wherein in response to inflating the first inflatable bladder and inflating the second inflatable bladder, the first inflatable bladder is free from direct contact with the second inflatable bladder.

## Patentansprüche

1. Aufblasbare Komponente (220) einer Flugzeugevakuierungsbaugruppe (108), wobei die aufblasbare Komponente Folgendes umfasst:
eine erste aufblasbare Blase (221), die eine erste Fluidkammer (222) definiert;
eine zweite aufblasbare Blase (226), die eine zweite Fluidkammer (227) definiert, wobei die zweite aufblasbare Blase die erste aufblasbare Blase umschreibt, sodass die erste aufblasbare Blase in der zweiten Fluidkammer angeordnet ist;
ein Einlassventil (224), das an die erste aufblasbare Blase und die zweite aufblasbare Blase gekoppelt ist, wobei das Einlassventil dazu konfiguriert ist, Fluid an die erste Fluidkammer abzugeben; und
ein Druckablassventil (229), das an die erste aufblasbare Blase gekoppelt ist, wobei Fluidkommunikation zwischen der ersten Fluidkammer und der zweiten Fluidkammer über das Druckablassventil erfolgt; und **dadurch gekennzeichnet, dass**
die erste aufblasbare Blase (221) an einer ersten Stelle entlang einer Länge des Einlassventils an das Einlassventil (224) gekoppelt ist und die zweite aufblasbare Blase (226) an einer zweiten Stelle entlang der Länge des Einlassventils an das Einlassventil gekoppelt ist, sodass die erste aufblasbare Blase (221) über das Einlassventil (224) indirekt an die zweite aufblasbare Blase (226) gekoppelt ist,
wobei die aufblasbare Komponente über die erste und zweite aufblasbare Blase vollständige Schichtredundanz umfasst.

2. Aufblasbare Komponente nach Anspruch 1, wobei das Einlassventil eine Schnittstelle zum Verbinden mit einem Fluidspeichertank der Flugzeugevakuierungsbaugruppe umfasst oder wobei das Einlassventil einen Aspirator umfasst, der dazu konfiguriert ist, Luft aus der Atmosphäre in die erste Fluidkammer mitzureißen.

3. Aufblasbare Komponente nach Anspruch 1, wobei die erste Stelle direkt benachbart zu der zweiten Stelle ist, sodass ein Abschnitt einer Außenfläche der ersten aufblasbaren Blase im Wesentlichen in direkter Berührung mit einem Abschnitt einer Innenfläche der zweiten aufblasbaren Blase steht, oder wobei die erste Stelle von der zweiten Stelle beabstandet ist, sodass ein Spalt besteht und teilweise zwischen der ersten aufblasbaren Blase an der ersten Stelle und der zweiten aufblasbaren Blase an der zweiten Stelle definiert ist.

4. Aufblasbare Komponente nach Anspruch 3, wobei die erste aufblasbare Blase und die zweite aufblasbare Blase als Reaktion darauf, dass sowohl die erste aufblasbare Blase als auch die zweite aufblasbare Blase aufgeblasen werden, einen zwischen der ersten aufblasbaren Blase und der zweiten aufblasbaren Blase definierten Hohlraum begrenzen.

5. Aufblasbare Komponente nach einem der vorhergehenden Ansprüche, wobei die zweite Fluidkammer von direkter fluidaufnehmender Kommunikation mit dem Einlassventil isoliert ist.

6. Aufblasbare Komponente nach Anspruch 1, wobei Fluidkommunikation zwischen der ersten Fluidkammer und der zweiten Fluidkammer ausschließlich über das Druckablassventil (229) erfolgt.

7. Aufblasbare Komponente nach einem der vorhergehenden Ansprüche, ferner umfassend eine Vielzahl von biegsamen Abstandshalterelementen (530), die zwischen der ersten aufblasbaren Blase und der zweiten aufblasbaren Blase angeordnet und an diese gekoppelt ist.

8. Aufblasbare Komponente nach einem der vorhergehenden Ansprüche, wobei das Druckablassventil einen Durchmesser zwischen 2,54 cm (1 Zoll) und 15,24 cm (6 Zoll) umfasst oder wobei das Druckablassventil einen Durchmesser zwischen 5,08 cm (2 Zoll) und 10,16 cm (4 Zoll) umfasst.

9. Flugzeugevakuierungsbaugruppe, umfassend:
einen Notrutschenkasten;
einen Fluidspeichertank, der an den Notrutschenkasten montiert ist;
die aufblasbare Komponente nach einem der vorhergehenden Ansprüche, wobei die aufblasbare Komponente ein aufblasbares Rutschenfloß (220) ist,
wobei das Einlassventil in fluidaufnehmender Kommunikation mit dem Fluidspeichertank gekoppelt ist, um ein Fluid aus dem Fluidspeichertank an die erste Fluidkammer abzugeben.

10. Flugzeugevakuierungsbaugruppe nach Anspruch 9, wobei das Einlassventil einen Aspirator (424) umfasst, der dazu konfiguriert ist, als Reaktion darauf, dass das Fluid aus dem Fluidspeichertank an die erste Fluidkammer abgegeben wird, Luft aus der umgebenden Atmosphäre in die erste Fluidkammer mitzureißen.

11. Verfahren zum Auslösen eines aufblasbaren Rutschenfloßes einer Flugzeugevakuierungsbaugruppe, wobei das Verfahren Folgendes umfasst:
Bereitstellen der aufblasbaren Komponente nach Anspruch 1; wobei die aufblasbare Komponente das aufblasbare Rutschenfloß ist;
Aufblasen der ersten aufblasbaren Blase durch Betätigen des Einlassventils zum Abgeben von Fluid in die erste Fluidkammer der ersten aufblasbaren Blase des aufblasbaren Rutschenfloßes; und
als Reaktion darauf, dass ein Fluiddruck in der ersten Fluidkammer einen vorbestimmten Druck erreicht, Aufblasen der zweiten aufblasbaren Blase durch Abgeben von Fluid aus der ersten Fluidkammer der ersten aufblasbaren Blase an die zweite Fluidkammer der zweiten aufblasbaren Blase des aufblasbaren Rutschenfloßes, wobei die zweite aufblasbare Blase die erste aufblasbare Blase umschreibt, sodass die erste aufblasbare Blase in der zweiten Fluidkammer angeordnet ist.

12. Verfahren nach Anspruch 11, wobei das Einlassventil einen Aspirator umfasst, sodass Aufblasen der ersten aufblasbaren Blase des aufblasbaren Rutschenfloßes Mitreißen von Luft aus der Atmosphäre in eine Fluidströmung aus einem Fluidspeichertank der Flugzeugevakuierungsbaugruppe in die erste Fluidkammer der ersten aufblasbaren Blase umfasst.

13. Verfahren nach Anspruch 11, wobei als Reaktion darauf, dass die erste aufblasbare Blase aufgeblasen wird und die zweite aufblasbare Blase aufgeblasen wird, die erste aufblasbare Blase keinerlei direkte Berührung mit der zweiten aufblasbaren Blase aufweist.

## Revendications

1. Composant gonflable (220) d'un ensemble d'évacuation d'aéronef (108), le composant gonflable comprenant :
une première vessie gonflable (221) définissant une première chambre de fluide (222) ;
une seconde vessie gonflable (226) définissant une seconde chambre de fluide (227), dans lequel la seconde vessie gonflable encercle la première vessie gonflable de telle sorte que la première vessie gonflable est disposée dans la seconde chambre de fluide ;
une soupape d'entrée (224) couplée à la première vessie gonflable et à la seconde vessie gonflable, dans lequel la soupape d'entrée est conçue pour délivrer un fluide à la première chambre de fluide ; et
une soupape de détente de pression (229) couplée à la première vessie gonflable, dans lequel une communication fluidique entre la première chambre de fluide et la seconde chambre de fluide se fait via la soupape de détente de pression ; et **caractérisé en ce que**
la première vessie gonflable (221) est couplée à la soupape d'entrée (224) à un premier emplacement suivant une longueur de la soupape d'entrée et la seconde vessie gonflable (226) est couplée à la soupape d'entrée à un second emplacement suivant la longueur de la soupape d'entrée de telle sorte que la première vessie gonflable (221) est couplée indirectement à la seconde vessie gonflable (226) via la soupape d'entrée (224),
dans lequel le composant gonflable comprend une redondance de couche complète via les première et seconde vessies gonflables.

2. Composant gonflable selon la revendication 1, dans lequel la soupape d'entrée comprend une interface pour se raccorder à un réservoir de stockage de fluide de l'ensemble d'évacuation d'aéronef, ou dans lequel la soupape d'entrée comprend un aspirateur conçu pour entraîner de l'air de l'atmosphère jusque dans la première chambre de fluide.

3. Composant gonflable selon la revendication 1, dans lequel le premier emplacement est directement adjacent au second emplacement de telle sorte qu'une portion d'une sélection extérieure de la première vessie gonflable est sensiblement en contact direct avec une portion d'une sélection intérieure de la seconde vessie gonflable, ou dans lequel le premier emplacement est espacé du second emplacement de telle sorte qu'un écartement existe et est partiellement défini entre la première vessie gonflable au premier emplacement et la seconde vessie gonflable au second emplacement.

4. Composant gonflable selon la revendication 3, dans lequel la première vessie gonflable et la seconde vessie gonflable, en réponse au fait que la première vessie gonflable et la seconde vessie gonflable sont toutes deux gonflées, délimitent un vide défini entre la première vessie gonflable et la seconde vessie gonflable.

5. Composant gonflable selon une quelconque revendication précédente, dans lequel la seconde chambre de fluide est isolée d'une communication de réception de fluide directe avec la soupape d'entrée.

6. Composant gonflable selon la revendication 1, dans lequel une communication fluidique entre la première chambre de fluide et la seconde chambre de fluide se fait exclusivement via la soupape de détente de pression (229).

7. Composant gonflable selon une quelconque revendication précédente, comprenant en outre une pluralité d'éléments espaceurs flexibles (530) disposés entre la première vessie gonflable et la seconde vessie gonflable et couplés à celles-ci.

8. Composant gonflable selon une quelconque revendication précédente, dans lequel la soupape de détente de pression comprend un diamètre entre 2,54 cm (1 pouce) et 15,24 cm (6 pouces), ou dans lequel la soupape de détente de pression comprend un diamètre entre 5,08 cm (2 pouces) et 10,16 cm (4 pouces).

9. Ensemble d'évacuation d'aéronef comprenant :
un paquetage ;
un réservoir de stockage de fluide monté sur le paquetage ;
le composant gonflable selon une quelconque revendication précédente, dans lequel le composant gonflable est une glissière-radeau gonflable (220),
dans lequel la soupape d'entrée est couplée en communication de réception de fluide avec le réservoir de stockage de fluide pour délivrer un fluide du réservoir de stockage de fluide à la première chambre de fluide.

10. Ensemble d'évacuation d'aéronef selon la revendication 9, dans lequel la soupape d'entrée comprend un aspirateur (424) conçu pour entraîner de l'air de l'atmosphère ambiante jusque dans la première chambre de fluide en réponse au fait que le fluide issu du réservoir de stockage de fluide est délivré à la première chambre de fluide.

11. Procédé de déploiement d'une glissière-radeau gonflable d'un ensemble d'évacuation d'aéronef, le procédé comprenant :
la fourniture du composant gonflable selon la revendication 1 ; dans lequel le composant gonflable est la glissière-radeau gonflable ;
le gonflage de la première vessie gonflable en actionnant la soupape d'entrée pour délivrer un fluide dans la première chambre de fluide de la première vessie gonflable de la glissière-radeau gonflable ; et
en réponse au fait qu'une pression de fluide dans la première chambre de fluide atteint une pression prédéterminée, le gonflage de la seconde vessie gonflable en délivrant un fluide de la première chambre de fluide de la première vessie gonflable à la seconde chambre de fluide de la seconde vessie gonflable de la glissière-radeau gonflable, dans lequel la seconde vessie gonflable encercle la première vessie gonflable de telle sorte que la première vessie gonflable est disposée dans la seconde chambre de fluide.

12. Procédé selon la revendication 11, dans lequel la soupape d'entrée comprend un aspirateur de telle sorte que le gonflage de la première vessie gonflable de la glissière-radeau gonflable comprend l'entraînement d'air de l'atmosphère jusque dans un écoulement de fluide issu d'un réservoir de stockage de fluide de l'ensemble d'évacuation d'aéronef jusque dans la première chambre de fluide de la première vessie gonflable.

13. Procédé selon la revendication 11, dans lequel en réponse au gonflage de la première vessie gonflable et au gonflage de la seconde vessie gonflable, la première vessie gonflable est sans contact direct avec la seconde vessie gonflable.
